# EUROPÄISCHE PATENTSCHRIFT

(11) **EP 3 142 913 B1**
(45) Veröffentlichungstag und Bekanntmachung des Hinweises auf die Patenterteilung: **28.10.2020**
(21) Anmeldenummer: 15721168.1
(22) Anmeldetag: 28.04.2015
(51) Int. Cl.: B60W 50/029, B60W 40/06, G06K 9/00, G01S 13/93, G01S 15/93, G01S 17/93

(54) **UMFELDKARTE FÜR FAHRFLÄCHEN MIT BELIEBIGEM HÖHENVERLAUF**
SURROUNDINGS MAP FOR DRIVING SURFACE WITH ANY HEIGHT PROFIL
CARTE D'ENVIRONNEMENT POUR SURFACE DE CONDUITE AYANT UN PROFIL DE HAUTEUR QUELCONQUE

(30) Priorität: 13.05.2014 DE 102014208967
(43) Veröffentlichungstag der Anmeldung: 22.03.2017
(73) Patentinhaber: Bayerische Motoren Werke Aktiengesellschaft, 80809 München (DE)
(72) Erfinder: WALESSA, Marc, 80999 München (DE)
(86) Internationale Anmeldenummer: PCT/EP2015/059178
(87) Internationale Veröffentlichungsnummer: WO 2015/173005

(56) Entgegenhaltungen:
- WO-A1-2011/066602
- DE-A1-102011 081 740
- JESSE HIMMELSTEIN ET AL: "Efficient architecture for collision detection between heterogeneous data structures application for vision-guided robots", CONTROL, AUTOMATION, ROBOTICS AND VISION, 2008. ICARCV 2008. 10TH INTERNATIONAL CONFERENCE ON, IEEE, PISCATAWAY, NJ, USA, 17. Dezember 2008 (2008-12-17), Seiten 522-529, XP031433641, ISBN: 978-1-4244-2286-9

## Beschreibung

Die Erfindung betrifft ein Verfahren zum Bereitstellen einer Hindernisumfeldkarte für ein Fahrzeug.

Heutzutage ist es bekannt, das Umfeld eines Fahrzeuges mithilfe von Sensoren wie Kameras, Lidar, Radar oder Ultraschall zu erfassen. Die Messungen werden häufig in einer Umfeldkarte (manchmal auch Grid genannt) repräsentiert, die Zellen umfasst, denen Abschnitte des Umfeldes (bspw. 8 cm x 8 cm) des Fahrzeugs zugeordnet sind. Die Repräsentation erfolgt häufig durch die Angabe, mit welcher Wahrscheinlichkeit der der jeweiligen Zelle zugeordnete Abschnitt des Umfeldes von einem Hindernis belegt ist. Aus diesem Grund wird diese Art Umfeldkarten häufig auch Belegungsgrid genannt. Aufbauend auf der Umfeldkarte können viele Fahrerassistenzsysteme wie automatische Abstandshaltung (ACC), hochautomatisiertes Fahren oder Notbremsassistenten realisiert werden.

Dabei gilt, dass Grid-basierte Ansätze zur Umfeldmodellierung klassischerweise für "fahrende" Fahrerassistenzfunktionen (bspw. ACC) und nicht im Park- und Rangierbereich eingesetzt werden. Für "fahrende" Funktionen, z.B. auf der Autobahn, gilt dabei im Allgemeinen die Annahme einer ebenen befahrbaren Oberfläche im Erfassungsbereich der Sensoren bzw. der Größe des verwendeten Grids.

Beim Eintragen der gemessenen Abstandwerte eines Sensors (z.B. Laserscanner) muss i.d.R. zwischen tatsächlichen Hindernissen oberhalb der befahrbaren Fläche und Messwerten auf der befahrbaren Fläche selbst unterschieden werden. Letztere dürfen nicht in das Grid als tatsächliches Hindernis eingetragen werden. Diese Unterscheidung ist nicht immer bereits sensorseitig möglich.

Üblicherweise geschieht die Unterscheidung zwischen Fahrbahnoberfläche und Hindernis dann unter Annahme einer näherungsweise ebenen befahrbaren Fläche und einfacher Schwellwertbildung: Alle Messwerte unterhalb einer bestimmten Höhe (bspw. <0.2m) werden als der Fahrbahn zugeordnet betrachtet und entsprechend nicht im Grid als Hindernis eingetragen.

Insbesondere für Park- und Rangierfunktionen ist die Annahme einer ebenen befahrbaren Oberfläche allerdings häufig verletzt. In der im Stand der Technik bekannten Unterscheidung von Bodenfläche und Hindernis wird beispielsweise beim Anfahren an eine aufwärtsgerichtete Rampe, zumindest ein Teil der Rampe als Hindernis erkannt. Dies führt zur Entstehung von Geisterhindernissen an Stellen der Fahrbahn, die eigentlich befahrbar sind. Die Funktion von Fahrerassistenzfunktionen ist in diesem Fall stark eingeschränkt bzw. fehlerhaft.

Im Dokument DE 10 2011 100 927 A1 wird unter anderem die Berechnung einer segmentierten nicht notwendigerweise flachen Bodenfläche basierend auf 3D-Lasermessungen beschrieben. Die Berechnung der Bodenfläche erfolgt allerdings basierend auf den Sensor-Messwerten in Form einer Punktewolke. Dieses Verfahren ist aufgrund der Verwendung von Punkt-Messwerten und den Echtzeitanforderungen sehr rechen- und speicheraufwendig. Bei den heute sowie in naher Zukunft erwarteten Rechen- und Speicherkapazitäten in Serienfahrzeugen wird derzeit nicht damit gerechnet, dass das dort vorgestellte Verfahren in Echtzeit ausgeführt werden kann. Somit kann es auch nicht als Grundlage für Fahrerassistenzfunktionen dienen.

Im Dokument US 8,565,958 B1 wird eine zellbasierte Auswertung von Sensormesswerten vorgeschlagen. Dabei wird der jeweils niedrigste Höhenwert in einer Zelle als Bodenwert interpretiert. Alle Höhenwerte, deren Höhe unter einem Schwellwert liegt, werden zur Bodenberechnung in der jeweiligen Zelle bestimmt. Dieses Verfahren setzt voraus, dass für jede Zelle umfangreiche Messdaten vorliegen. In der Praxis hat sich gezeigt, dass für größere Teile des Umfeldes häufig keine Messwerte vorliegen. Ferner arbeitet auch dieses Verfahren zur Bodenbestimmung auf einzelnen Messwerten der Punktewolke. Wie oben bereits ausgeführt, wird derzeit davon ausgegangen, dass ein solches Verfahren aufgrund der erwarteten begrenzen Rechen- und Speicherkapazitäten in Fahrzeugen nicht in Echtzeit ausführbar ist.

Dokument WO 2011/066602 A1 offenbart einen Extraktionsprozess für Objekte oder Geländeeigenschaften. Dafür werden Messwerte in Zellen eingeteilt und dem Objekt oder dem Gelände zugewiesen, und ggf. Unterzellen gebildet, in denen wiederum zwischen Objekt und Gelände unterschieden wird.

Der Erfindung liegt deshalb die Aufgabe zugrunde, bei begrenzter Rechen- und Speicherkapazität die Erstellung einer Umfeldkarte derart zu ermöglichen, dass auch bei unebenen Fahrflächen eine korrekte Hinderniserkennung möglich ist.

Die Aufgabe wird durch das Verfahren und die Steuereinheit gemäß den unabhängigen Ansprüchen gelöst. Vorteilhafte Weiterbildungen sind in den abhängigen Ansprüchen definiert.

Das erfindungsgemäße Verfahren betrifft das Bereitstellen einer Hindernisumfeldkarte für ein Fahrzeug, nämlich einer Umfeldkarte, die in Zellen aufgeteilt ist, denen jeweils eine Belegungswahrscheinlichkeit und eine korrigierte Hindernishöhe zugewiesen sind. Das Verfahren umfasst: Bereitstellen einer Ausgangsumfeldkarte, nämlich einer Umfeldkarte, die in Zellen aufgeteilt ist, denen jeweils eine Belegungswahrscheinlichkeit und eine Hindernishöhe zugewiesen ist; Für jede Zelle der Ausgangsumfeldkarte: Bestimmen einer Bodenhöhe basierend auf den Hindernishöhen der Ausgangsumfeldkarte, wobei die Bodenhöhe durch eine Glättung von Hindernishöhen der Ausgangsumfeldkarte ermittelt wird; Für jede Zelle der Hindernisumfeldkarte: Bestimmen der korrigierten Hindernishöhe basierend auf der für die entsprechende Zelle der Ausgangsumfeldkarte bestimmten Bodenhöhe und der der entsprechenden Zelle der Ausgangsumfeldkarte zugeordneten Hindernishöhe; Bestimmen der jeweiligen Belegungswahrscheinlichkeit basierend auf der der entsprechenden Zelle der Ausgangsumfeldkarte zugeordneten Belegungswahrscheinlichkeit; Bereitstellen der Hindernisumfeldkarte. Die Ausgangsumfeldkarte kann weniger Zellen als Hindernisumfeldkarte umfassen und die Ausgangsumfeldkarte kann Teil einer größeren Umfeldkarte sein. Auch die Höhe des Bodens wird hierin als Hindernishöhe verstanden.

Das Verfahren arbeitet mit Hindernishöhen und nicht mit den Einzelmessungen der Sensoren, also der Punktewolke. Die Hindernishöhen ergeben sich aus einer Auswertung von Einzelmessungen der Sensoren, die einer Zelle zugeordnet sind. Die Anzahl der Daten ist somit gegenüber der Punktewolke verringert und ermöglicht bei den erwarteten Rechen- und Speicherkapazitäten von typischen Serienfahrzeugen (PKW) eine Ausführung des Verfahrens in Echtzeit und damit eine Nutzung durch Fahrerassistenzsysteme. Die Korrektur der Hindernishöhe wird basierend auf mehreren Hindernishöhen der Ausgangsumfeldkarte ausgeführt und durch eine Glättung dieser Werte realisiert.

Die Glättung kann durch einen sogenannten Pyramidenansatz erreicht werden, bei dem Hindernishöhen benachbarter Zellen zusammengelegt werden, beispielsweise durch Wahl des Minimums der Hindernishöhen oder durch einen (gewichteten) Mittelwert. Die Glättung kann auch mithilfe von Wavelets oder durch einen Multiscale-Ansatz ausgeführt werden.

Typischerweise wird für die korrigierte Hindernishöhe ein den Boden repräsentierender Wert bestimmt, wenn sich die der entsprechenden Zelle der Ausgangsumfeldkarte zugeordnete Hindernishöhe gemäß einem vordefinierten Kriterium nicht von der der entsprechenden Zelle der Ausgangsumfeldkarte zugeordnete Bodenhöhe unterscheidet. Als Kriterium ist insbesondere eine Höhendifferenz zwischen der Hindernishöhe und der Bodenhöhe gemäß der Ausgangsumfeldkarte definiert, beispielsweise 0,1m; 0,25m oder 0,3m.

Zur Bestimmung der korrigierten Hindernishöhe wird somit die Differenz zwischen der Hindernishöhe der Ausgangsumfeldkarte und der entsprechenden Bodenhöhe betrachtet. Liegt diese unterhalb eines Schwellwertes, so wird der Zelle eine Hindernishöhe zugewiesen, die den Boden repräsentiert.

Erfindungsgemäß berücksichtigt die Glättung Hindernishöhen von Zellen der Ausgangsumfeldkarte, die an die Zelle angrenzen, für die Bodenhöhe bestimmt wird. Dieser Ansatz nutzt die Tatsache aus, dass Sensoren von einem Hindernis im Wesentlichen nur dessen Front erkennen können. Der Großteil der Messwerte und der Hindernishöhen der Zellen wird sich also auf die Messung des Bodens beziehen. Die Glättung wird also im Wesentlichen von den Hindernishöhen derjenigen Zellen bestimmt, die Umfeldabschnitte repräsentieren, in denen sich die Fahrbahn befindet. Weiterhin kann dieser Effekt dadurch gewährleistet werden, dass die Glättung den Minimalwert benachbarter Hindernishöhen dominant gegenüber größeren Hindernishöhen behandelt.

Typischerweise wird die Bodenhöhe nicht für jede Zelle einzeln bestimmt. Statt dessen wird in einem zusätzlichen Schritt des Verfahrens eine Bodenfläche für alle Zellen der Ausgangsumfeldkarte bestimmt: Bestimmen einer Bodenfläche basierend auf einer Glättung von allen oder zumindest mehreren Hindernishöhen der Ausgangsumfeldkarte. Ausgehend von dieser Bodenfläche wird dann die Bodenhöhe in der jeweils betrachteten Zelle bestimmt. Die Bodenfläche kann durch eine mathematische Repräsentation (ggf. mit Stützpunkten) angegeben werden, oder tatsächlich als Punktekurve bzw. Punktefläche.

Die Bodenfläche repräsentiert häufig zumindest teilweise eine schiefe ebene Fläche und/oder einen Übergang zwischen verschiedenen ebenen Flächen. Damit ermöglicht das Verfahren eine korrekte Erkennung von Hindernissen, auch in Fällen, in denen das Fahrzeug beispielsweise vor dem Beginn einer aufwärtsgerichteten befahrbaren Rampe steht.

In vielen Fällen werden die Sensormessungen nicht in den zugehörigen Umfeldabschnitten jeder Zelle Objekte oder den Boden erkennen können oder nicht in einer ausreichenden Anzahl erkennen können, so dass nicht für jede Zelle Informationen zur Höhe dort erkannter Objektes vorhanden sind. Für Zellen, in denen keine Information zur Höhe dort befindlicher Objekte bzw. des Bodens zur Verfügung stehen, kann die Höheninformation auf einen vordefinierten Fehlerwert gesetzt werden. Mit anderen Worten: Die Hindernishöhen der Ausgangsumfeldkarte und die korrigierten Hindernishöhen können jeweils auch einen Fehlerwert annehmen, der repräsentiert, dass für die jeweilige Zelle keine aussagekräftige Messung für die Hindernishöhe vorliegt. In diesem Fall nimmt auch die korrigierte Hindernishöhe der entsprechenden Zelle der Hindernisumfeldkarte diesen Fehlerwert an.

In einer vorteilhaften Ausprägung repräsentieren die Zellen der Hindernisumfeldkarte jeweils denselben Bereich des Umfeldes wie die Zellen der Ausgangsumfeldkarte. Die geometrische Repräsentation durch Hindernisumfeldkarte und Ausgangsumfeldkarte ist somit identisch.

In einer typischen Implementierung umfasst das Verfahren ferner: Bereitstellen von Hindernispunktmessungen, die jeweils die dreidimensionale räumliche Position eines Punktes im Umfeld des Fahrzeugs, der als Hindernis erkannt wurde, beschreiben; Ermitteln der Ausgangsumfeldkarte basierend auf den Hindernispunktmessungen. Die Sensoren des Fahrzeugs, beispielsweise Lidar-Sensoren oder eine Kamera mit im Stand der Technik bekannter structure from motion Verarbeitung, liefern die dreidimensionale Position von Punkten im Umfeld (auch auf dem Boden), die erkannt wurden, also eine 3D Punktewolke. Diese erkannten Punkte werden hierin als Hindernispunkte bezeichnet (und umfassen typischerweise auch Punkte auf dem Boden). Die einzelnen Hindernispunkte werden dann den Zellen der Ausgangsumfeldkarte zugeordnet, die zuvor definiert wird. Die Zuordnung geschieht typischerweise anhand der x-/y- Koordinaten der Hindernispunkte (also der 2D Position der Punkte, die die Höheninformation nicht berücksichtigt) im Vergleich mit den Abschnitten des Umfeldes, die durch Zellen repräsentiert werden. Somit werden jeder Zelle typischerweise mehrere (bspw. 5 bis 50) Hindernispunkte zugeordnet. Um die Hindernishöhe für die jeweilige Zelle zu bestimmen, werden die Höheninformationen der 3D Position der Hindernispunkte ausgewertet (z-Komponente). Typischerweise wird die Hindernishöhe anhand einer oder mehrere der folgenden Kriterien bestimmt: Maximale Höheninformation der einer Zelle zugeordneten Hindernispunkte; Varianz der Höheninformation der einer Zelle zugeordneten Hindernispunkte; Differenz zwischen minimaler Höheninformation und maximaler Höheninformation der einer Zelle zugeordneten Hindernispunkte.

Neben der Hindernishöhe wird für jede Zelle auch eine Belegungswahrscheinlichkeit bestimmt, die sich insbesondere aus der Anzahl der Hindernispunkte ergibt, die einer Zelle zugeordnet sind. Dabei kann eine lineare Zuordnung der Anzahl der Hindernispunkte in einer Zelle zu einer Belegungswahrscheinlichkeit vorgenommen werden (mit einer Obergrenze, ab der die Belegungswahrscheinlichkeit 100% beträgt).

Ein anderer Aspekt der Erfindung betrifft eine Steuereinheit für ein Fahrzeug, umfassend Speicher, elektronische Rechenmittel und elektronische Schnittstellen, wobei die Steuereinheit dazu eingerichtet ist, eines der oben dargestellten Verfahren auszuführen. Die elektronischen Schnittstellen können dazu eingerichtet sein Kommunikationsverbindungen zu Sensoren des Fahrzeugs und Fahrerassistenzsystemen herzustellen.

Die Erfindung erlaubt die Verwendung von gridbasierten Ansätzen der Umfelderfassung mit entfernungsgebender Sensorik auch im Park- und Rangierbereich bei der Befahrung der dort häufig vorkommenden beliebig geformten, unebenen Fahrflächen. Damit können die Vorzüge der gridbasierten Ansätze auch für diese Verwendung gewinnbringend eingesetzt werden, was vorher nicht oder nur eingeschränkt möglich war. Zusätzlich erlaubt das dargestellte Verfahren die zukünftige Verwendung eines gemeinsamen Grids für "Fahren" und "Parken", bei dem auch die "Fahren"-Funktionen nicht mehr an die Annahme einer durchgängigen flachen Ebene gebunden sind.

### KURZE BESCHREIBUNG DER ZEICHNUNGEN

Fig. 1 zeigt ein Ablaufdiagramm zum Bereitstellen einer Hindernisumfeldkarte gemäß einem Ausführungsbeispiel.
Fig. 2 zeigt schematisch die Bestimmung der Bodenfläche für eine Ausgangsumfeldkarte gemäß einem Ausführungsbeispiel.
Fig. 3a und 3b zeigen schematisch für eine eindimensionalen Betrachtung die Bestimmung der korrigierten Hindernishöhe gemäß einem Ausführungsbeispiel.
Fig. 4a zeigt schematisch eine Ausgangsumfeldkarte gemäß einem Ausführungsbeispiel.
Fig. 4b zeigt schematisch eine Hindernisumfeldkarte gemäß einem Ausführungsbeispiel.
Fig. 5 zeigt schematisch ein Fahrzeug mit erfindungsgemäßem System gemäß einem Ausführungsbeispiel.
Fig. 6 zeigt schematisch eine interpolierte Ausgangumfeldkarte für die Ausgangsumfeldkarte nach Fig. 4b gemäß einem Ausführungsbeispiel.

Gleiche Bezugszeichen beziehen sich auf sich entsprechende Elemente über die Figuren hinweg.

### DETAILLIERTE BESCHREIBUNG DER AUSFÜHRUNGSBEISPIELE

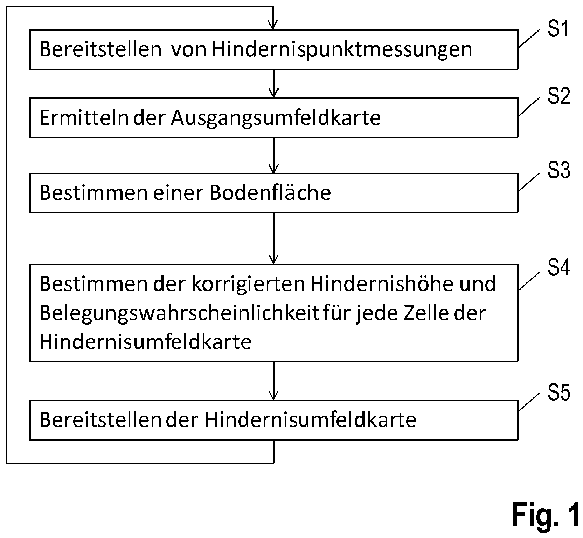

Fig. 1 zeigt ein Ablaufdiagramm zum Bereitstellen einer Hindernisumfeldkarte gemäß einem Ausführungsbeispiel. In einem ersten Schritt S1 werden Hindernispunktmessungen bereitgestellt. Die Sensoren des Fahrzeugs überprüfen das Umfeld des Fahrzeugs punktweise und erkennen, an welchen Punktposition ein Hindernis (betreffend hierin auch den Boden) besteht. Die Positionen der Punkte, die überprüft werden, kann zufällig sein und von der Erkennbarkeit der Umgebung an diesen Punkten abhängen. Als Ergebnis liefern die Sensoren (und angeschlossene Vorverarbeitung) die dreidimensionale Position von Punkten, an denen Hindernisse erkannt wurden (Hindernispunkte).

In einem Schritt S2 werden diese Hindernispunktmessungen jeweils einer Zelle der Ausgangsumfeldkarte zugeordnet. Die Ausgangsumfeldkarte und deren Aufteilung in Zellen werden gemäß einer Vordefinition bereitgestellt, die auch die aktuelle Fahrsituation des Fahrzeugs (Parken, Autobahnfahrt, Stadtfahrt, etc.) berücksichtigen kann. Die Zuordnung der Hindernispunktmessungen zu Zellen hängt davon ab, in welchem von einer Zelle repräsentierten Abschnitt des Umfeldes sich die Hindernispunktmessung befindet. Da die Abschnitte des Umfeldes typischerweise mit rechteckiger Grundfläche und senkrechten "Wänden" gewählt werden, kann die Zuordnung anhand der x-/y-Koordinaten (also ohne Berücksichtigung der gemessenen Höhe des Hindernispunktes) erfolgen.

Ferner wird im Schritt S2 die Höheninformation der einer Zelle zugeordneten Hindernispunkte konsolidiert. Dies geschieht durch eine Auswertung der Minimal- und Maximalwerte der Höheninformation sowie der Varianz der Höheninformation der zugeordneten Hindernispunkte. Im Ergebnis wird einer Zelle eine Hindernishöhe zugeordnet. Ferner wird für die Zelle eine Belegungswahrscheinlichkeit bestimmt, die sich aus der Anzahl der Hindernispunktmessungen, die einer Zelle zugeordnet sind, ergibt. Sind einer Zelle keine oder nur eine unzureichende Anzahl von Hindernispunktmessungen zugeordnet, kann dieser Zelle für die Hindernishöhe und die Belegungswahrscheinlichkeit auch ein Wert zugeordnet werden, der angibt, dass für diese Zelle keine Aussagen getroffen werden können.

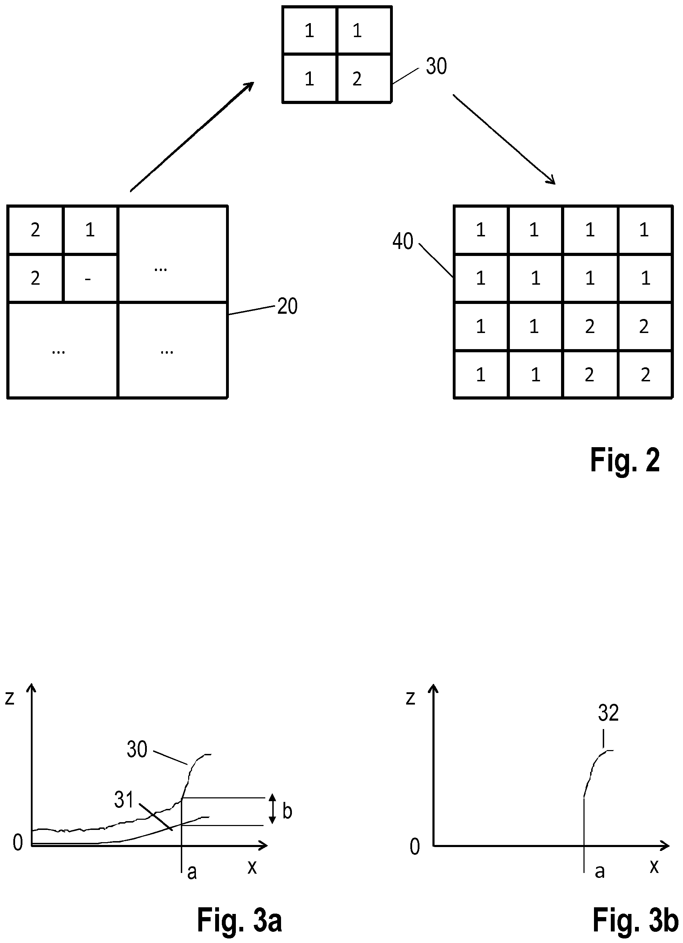

In einem Schritt S3 wird eine Bodenfläche für die Ausgangsumfeldkarte bestimmt. Dazu werden die Hindernishöhen der Ausgangsumfeldkarte geglättet. Ein beispielhaftes Verfahren dazu wird mit Bezug auf Fig. 2 erläutert. Eine schematisch dargestellte Ausgangsumfeldkarte 20 enthält 16 Zellen, von denen die vier Zellen links oben im Detail dargestellt sind. Diesen Zellen wurden die Hindernishöhen 2, 1, 2 und - zugewiesen, wobei - einen Wert repräsentiert, der darauf hindeutet, dass für diese Zelle keine Aussage zur Hindernishöhe und Belegung getroffen werden kann.

In einem ersten Schritt werden die Hindernishöhen von jeweils vier benachbarten Zellen zu einem Wert zusammengefasst. Diese Zusammenfassung geschieht derart, dass der resultierende Wert das Minimum der zusammengefassten Hindernishöhen repräsentiert, wobei Hindernishöhen, die keine Aussage treffen (-) unberücksichtigt bleiben. So werden die vier in der Ausgangsumfeldkarte 20 dargestellten Hindernishöhen zum Wert "1" zusammengefasst, der in die entstehende Matrix 30 links oben eingetragen wird. Die Werte der übrigen Zellen der Ausgangsumfeldkarte 20 seien derart, dass die in der Matrix 30 gezeigten Werte entstehen. Um zu der geglätteten Bodenfläche zu gelangen werden die errechneten Werte zurückpropagiert, wodurch die Bodenflächenmatrix 40 erhalten wird. Dabei wird jeder Wert der Matrix 30 vier benachbarten Zellen als Hindernishöhe zugewiesen. So wird der Wert "1" der linken oberen Zelle der Matrix 30 den vier benachbarten Zellen links oben in der Bodenflächenmatrix 40 zugewiesen, der Wert "2" den vier Zellen rechts unten, usw. Auf diese Weise wird für jede Zelle der Ausgangsumfeldkarte eine Bodenhöhe bestimmt. Diese ist der Wert, der der Zelle der Bodenflächenmatrix 40 zugewiesen ist, die in ihrer Anordnung der Zelle der Ausgangsumfeldkarte 20 entspricht. Das in Bezug auf Fig. 2 erläuterte Verfahren wird auch als Pyramidenansatz bezeichnet.

Diese Verfahren der Glättung und Bodenflächenbestimmung wird auf den konsolidierten Werten der Hindernispunktmessungen, nämlich den Hindernishöhen, ausgeführt. Durch die reduzierte Anzahl an zu verarbeitenden Werten kann das Verfahren mit der erwarteten Rechen- und Speicherkapazität in zukünftigen Fahrzeugen in Echtzeit ausgeführt werden.

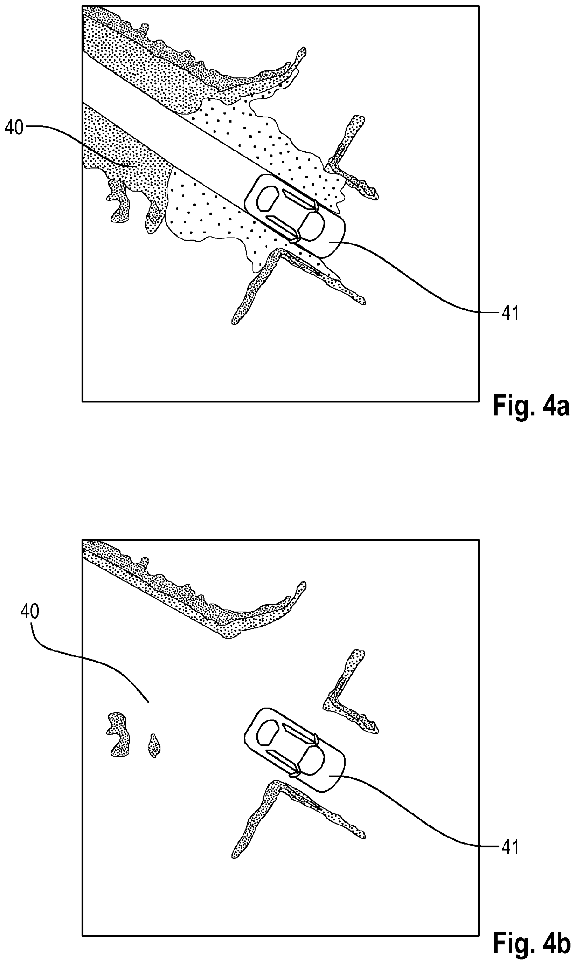

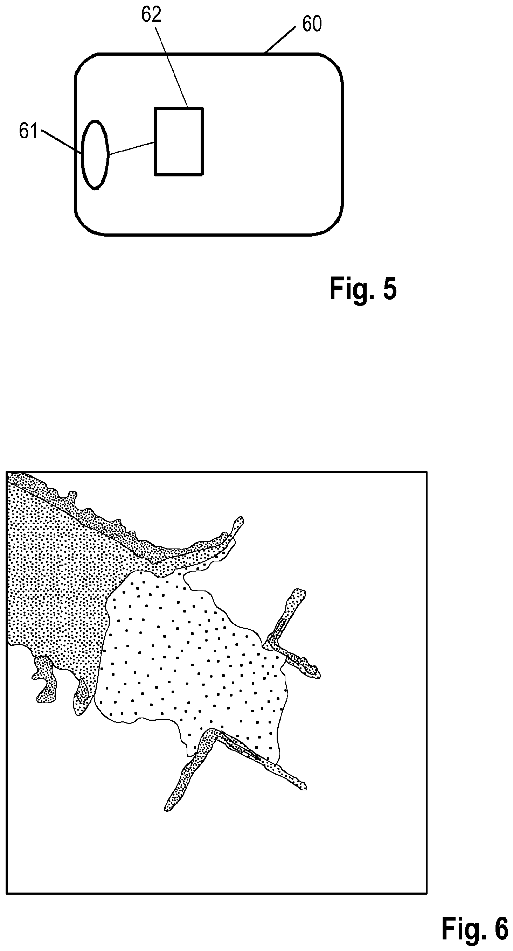

In einem nächsten Schritt S4 wird die korrigierte Hindernishöhe basierend auf der Bodenflächenmatrix und der Ausgangsumfeldkarte bestimmt. Das Vorgehen hierzu wird mit Bezug auf Fig. 3a und 3b beschrieben. Fig. 3a zeigt schematisch den Kurvenverlauf 30 der Hindernishöhen von Zellen in x-Richtung einer Ausgangsumfeldkarte. Die Hindernishöhen werden auch als z-Koordinate bezeichnet. In manchen Implementierungen ist vorgesehen, die Ausgangsumfeldkarte in einem Zwischenschritt zu interpolieren, beispielsweise mit einem modifizierten Pyramidenansatz mit Tiefpassfilterung, und basierend auf dieser Interpolation das Verfahren nach Schritt S4 auszuführen. Dies kann sinnvoll sein, wenn viele Zellen der Ausgangsumfeldkarte keine Hindernishöhen basierend auf ausreichenden Messungen zugewiesen werden können (sparse-besetzte Ausgangsumfeldkarte). Fig. 6 zeigt beispielhaft eine solche interpolierte Ausgangumfeldkarte für die Ausgangsumfeldkarte nach Fig. 4a.

Hierin wird angenommen, dass die Anzahl der Zellen derart groß ist, dass die einzelnen Schritte in der Kurve 30 nicht erkennbar sind und die Kurve 30 deshalb kontinuierlich erscheint. Mit der Bezugsziffer 31 wird die Kurve der Bodenhöhen bezeichnet, die für die entsprechenden Zellen der Ausgangsumfeldkarte bestimmt wurden. Zur Bestimmung der korrigierten Hindernishöhen wird die Höhendifferenz zwischen der jeweiligen Bodenhöhe und der Hindernishöhe der Ausgangsumfeldkarte betrachtet. Wenn diese Höhendifferenz einen Schwellwert b überschreitet (beispielsweise 25 cm), wird erkannt, dass es sich um ein Hindernis handelt. Die korrigierte Hindernishöhe ist entweder 0 bzw. der Wert für die Bodenhöhe, wenn die Höhendifferenz den Schwellwert b nicht überschreitet. Ansonsten ist die korrigierte Hindernishöhe die Hindernishöhe wie sie in der Ausgangsumfeldkarte angegeben ist. Im Beispiel der Fig. 3a wird die Höhendifferenz an der Stelle x=a überschritten. Fig. 3b zeigt den Kurvenverlauf 32 der korrigierten Hindernishöhen der Hindernisumfeldkarte. Bis zur Stelle x=a verläuft die Kurve der korrigierten Hindernishöhen bei z=0. An der Stelle x=a folgt die Kurve 32 den Werten der Hindernishöhen der Ausgangsumfeldkarte.

Schließlich wird die errechnete Hindernisumfeldkarte in einem Schritt S5 zur Verfügung gestellt.

Fig. 4a zeigt schematisch eine Ausgangsumfeldkarte gemäß einem Ausführungsbeispiel. Ein Fahrzeug 41 befindet sich am Fuß einer aufsteigenden Rampe, die sich vom Fahrzeug 41 aus nach links oben erstreckt in Richtung des Bereiches 40. Das Fahrzeug befindet sich im Kreuzungsbereich von zwei aufeinandertreffenden befahrbaren Wegen und ist von links oben zu seiner dargestellten Position gefahren. Die Dichte der dargestellten Punkte in den Flächen zeigt an, welche Hindernishöhen für Zellen in der Fläche ermittelt wurden. Je dichter die dargestellten Punkte, desto größer ist die erkannte Hindernishöhe. Die dargestellten Punkte stellen nicht die Hindernispunkte selbst dar. Die im Bereich 40 erkannten Hindernishöhen weisen Höhenwerte auf, die über einem Schwellwert liegen, der im Stand der Technik dafür verwendet wird, Boden und Hindernis zu unterscheiden. Mit anderen Worten: Der Bereich 40 würde im Stand der Technik als Hindernis erkannt, obwohl es sich um eine befahrbare Rampe handelt.

Fig. 4b zeigt schematisch eine Hindernisumfeldkarte mit korrigierten Hindernishöhen, wie sie sich nach beispielhafter Anwendung des erfindungsgemäßen Verfahrens ergibt. Wie ersichtlich ist, wird der Bereich 40 nicht mehr als Hindernis erkannt. Folglich können Fahrerassistenzsysteme, die auf der bereitgestellten Hindernisumfeldkarte aufbauen ihre Funktion auch im Bereich der beispielhaften Rampe korrekt ausführen.

Fig. 5 zeigt schematisch ein Fahrzeug mit Steuereinheit gemäß einem Ausführungsbeispiel. Ein Fahrzeug 60 umfasst eine Steuereinheit 62 mit elektronischer Recheneinheit und Speichermitteln. Weiterhin umfasst das Fahrzeug 60 eine Kamera 61, die fortlaufend Aufnahmen der Umgebung des Fahrzeugs 61 bereitstellt. Aus den fortlaufenden Aufnahmen der Kamera 61 und Informationen zur Fortbewegung des Fahrzeugs (beispielsweise von Radsensoren) wird mittels eines sogenannten und im Stand der Technik bekannten "structure from motion" Verfahrens Hindernispunktmessungen bereitgestellt. Die als Grundlage des oben dargestellten Verfahrens dienen, zu dessen Ausführung die Steuereinheit 62 eingerichtet ist. Die errechnete Hindernisumfeldkarte wird Fahrerassistenzfunktionen im Fahrzeug bereitgestellt.

Die Erfindung erlaubt die Verwendung von gridbasierten Ansätzen der Umfelderfassung mit entfernungsgebender Sensorik auch im Park- und Rangierbereich bei der Befahrung der dort häufig vorkommenden beliebig geformten, unebenen Fahrflächen. Damit können die Vorzüge der gridbasierten Ansätze auch für diese Usecases gewinnbringend eingesetzt werden, was vorher nicht oder nur eingeschränkt möglich war. Zusätzlich erlaubt das dargestellte Verfahren die zukünftige Verwendung eines gemeinsamen Grids für "Fahren" und "Parken", bei dem auch die "Fahren"-Funktionen nicht mehr an die Ebenenannahme gebunden sind. Darüber hinaus kann die Beschaffenheit der Bodenfläche und damit der Bodenhöhen beliebig sein und unterliegt keinen beschränkenden Modellannahmen.

## Patentansprüche

1. Verfahren zum Bereitstellen einer Hindernisumfeldkarte für ein Fahrzeug, nämlich einer Umfeldkarte, die in Zellen aufgeteilt ist, denen jeweils eine Belegungswahrscheinlichkeit und eine korrigierte Hindernishöhe zugewiesen ist, umfassend:
Bereitstellen einer Ausgangsumfeldkarte, nämlich einer Umfeldkarte, die in Zellen aufgeteilt ist, denen jeweils eine Belegungswahrscheinlichkeit und eine Hindernishöhe zugewiesen ist;
Für jede Zelle der Ausgangsumfeldkarte:
Bestimmen einer Bodenhöhe basierend auf den Hindernishöhen der Ausgangsumfeldkarte, wobei die Bodenhöhe durch eine Glättung von Hindernishöhen der Ausgangsumfeldkarte ermittelt wird; wobei die Glättung der Hindernishöhen Hindernishöhen von Zellen der Ausgangsumfeldkarte berücksichtigt, die an die Zelle angrenzen, für die die Bodenhöhe bestimmt wird;
Für jede Zelle der Hindernisumfeldkarte:
Bestimmen der korrigierten Hindernishöhe basierend auf der für die entsprechende Zelle der Ausgangsumfeldkarte bestimmten Bodenhöhe und der der entsprechenden Zelle der Ausgangsumfeldkarte zugeordneten Hindernishöhe;
Bestimmen der jeweiligen Belegungswahrscheinlichkeit basierend auf der der entsprechenden Zelle der Ausgangsumfeldkarte zugeordneten Belegungswahrscheinlichkeit;
Bereitstellen der Hindernisumfeldkarte.

2. Verfahren nach Anspruch 1, wobei für die korrigierte Hindernishöhe ein den Boden repräsentierender Wert bestimmt wird, wenn sich die der entsprechenden Zelle der Ausgangsumfeldkarte zugeordnete Hindernishöhe gemäß einem vordefinierten Kriterium nicht von der der entsprechenden Zelle der Ausgangsumfeldkarte zugeordnete Bodenhöhe unterscheidet; wobei das Kriterium insbesondere eine Höhendifferenz zwischen der Hindernishöhe und der Bodenhöhe gemäß der Ausgangsumfeldkarte definiert.

3. Verfahren nach einem der vorhergehenden Ansprüche, wobei das Verfahren ferner umfasst:
Bestimmen einer Bodenfläche basierend auf einer Glättung von allen oder zumindest mehreren Hindernishöhen der Ausgangsumfeldkarte;
Wobei das Bestimmen der Bodenhöhe basierend auf der bestimmten Bodenfläche ausgeführt wird.

4. Verfahren nach Anspruch 3, wobei die Bodenfläche zumindest teilweise eine schiefe ebene Fläche und/oder einen Übergang zwischen verschiedenen ebenen Flächen repräsentiert.

5. Verfahren nach einem der vorhergehenden Ansprüche,
wobei die Hindernishöhen der Ausgangsumfeldkarte und die korrigierten Hindernishöhen jeweils auch einen Fehlerwert annehmen können, der repräsentiert, dass für die jeweilige Zelle keine aussagekräftige Messung für die Hindernishöhe vorliegt;
wobei die korrigierte Hindernishöhe den Fehlerwert annimmt, wenn die Hindernishöhe der entsprechenden Zelle der Ausgangsumfeldkarte den Fehlerwert aufweist.

6. Verfahren nach einem der vorhergehenden Ansprüche, wobei jede der Zellen der Hindernisumfeldkarte den jeweils selben Bereich des Umfeldes repräsentiert wie die entsprechende Zelle der Ausgangsumfeldkarte.

7. Verfahren nach einem der vorhergehenden Ansprüche, ferner umfassend:
Bereitstellen von Hindernispunktmessungen, die jeweils die dreidimensionale räumliche Position eines Punktes im Umfeld des Fahrzeugs, der als Hindernis erkannt wurde, beschreiben;
Ermitteln der Ausgangsumfeldkarte basierend auf den Hindernispunktmessungen.

8. Verfahren nach Anspruch 7, wobei die Hindernispunktmessungen mithilfe von Kamerasensoren, Radarsensoren, Lidarsensoren oder Ultraschallsensoren des Fahrzeugs gewonnen wurden.

9. Steuereinheit für ein Fahrzeug, umfassend Speicher, elektronische Rechenmittel und elektronische Schnittstellen, wobei die Steuereinheit dazu eingerichtet ist, ein Verfahren nach einem der vorhergehenden Ansprüche auszuführen.

## Claims

1. Method for providing an obstacle vicinity map for a vehicle, specifically a vicinity map that is divided into cells to which in each case an occupancy probability and a corrected obstacle height are assigned, comprising:
providing a starting vicinity map, specifically a vicinity map that is divided into cells to which in each case an occupancy probability and an obstacle height are assigned;
for each cell of the starting vicinity map:
determining a ground height based on the obstacle heights of the starting vicinity map, wherein the ground height is ascertained by smoothing obstacle heights of the starting vicinity map; wherein the smoothing of the obstacle heights takes into consideration obstacle heights of cells of the starting vicinity map which border the cell for which the ground height is determined;
for each cell of the obstacle vicinity map:
determining the corrected obstacle height based on the ground height determined for the corresponding cell of the starting vicinity map and on the obstacle height that is assigned to the corresponding cell of the starting vicinity map;
determining the respective occupancy probability based on the occupancy probability assigned to the corresponding cell of the starting vicinity map;
providing the obstacle vicinity map.

2. Method according to Claim 1, wherein a value representing the ground is determined for the corrected obstacle height if the obstacle height that is assigned to the corresponding cell of the starting vicinity map does not differ in terms of a predefined criterion from the ground height that is assigned to the corresponding cell of the starting vicinity map; wherein the criterion defines in particular a height difference between the obstacle height and the ground height according to the starting vicinity map.

3. Method according to one of the preceding claims, wherein the method furthermore comprises:
determining a ground surface based on a smoothing of all, or at least a plurality of, obstacle heights of the starting vicinity map;
wherein the determination of the ground height is carried out based on the determined ground surface.

4. Method according to Claim 3, wherein the ground surface represents at least partially a sloped planar surface and/or a transition between different planar surfaces.

5. Method according to one of the preceding claims,
wherein the obstacle heights of the starting vicinity map and the corrected obstacle heights can in each case also assume an error value which represents that no decisive measurement for the obstacle height is available for the respective cell;
wherein the corrected obstacle height assumes the error value if the obstacle height of the corresponding cell of the starting vicinity map has the error value.

6. Method according to one of the preceding claims, wherein each of the cells of the obstacle vicinity map represents the in each case same region of the vicinity as the corresponding cell of the starting vicinity map.

7. Method according to one of the preceding claims, furthermore comprising:
providing obstacle point measurements which describe in each case the three-dimensional spatial position of a point in the vicinity of the vehicle, which was identified as an obstacle;
ascertaining the starting vicinity map based on the obstacle point measurements.

8. Method according to Claim 7, wherein the obstacle point measurements were obtained with the aid of camera sensors, radar sensors, lidar sensors or ultrasound sensors of the vehicle.

9. Control unit for a vehicle, comprising memory, electronic calculation means and electronic interfaces, wherein the control unit is adapted to carry out a method according to one of the preceding claims.

## Revendications

1. Procédé permettant de fournir une carte d'environnement d'obstacles pour un véhicule, notamment une carte d'environnement qui est subdivisée en cellules auxquelles une probabilité d'occupation et une hauteur d'obstacle corrigée sont allouées, respectivement, comprenant les étapes consistant à :
fournir une carte d'environnement de départ, notamment une carte d'environnement qui est subdivisée en cellules auxquelles une probabilité d'occupation et une hauteur d'obstacle sont allouées, respectivement ;
pour chaque cellule de la carte d'environnement de départ :
déterminer un niveau du sol sur la base des hauteurs d'obstacles de la carte d'environnement de départ, le niveau du sol étant déterminé par un lissage des hauteurs d'obstacles de la carte d'environnement de départ ; le lissage des hauteurs d'obstacles tenant compte des hauteurs d'obstacles de cellules de la carte d'environnement de départ qui sont adjacentes à la cellule pour laquelle le niveau du sol est déterminé ;
pour chaque cellule de la carte d'environnement d'obstacles :
déterminer la hauteur d'obstacle corrigée sur la base du niveau du sol déterminé pour la cellule correspondante de la carte d'environnement de départ et de la hauteur d'obstacle allouée à la cellule correspondante de la carte d'environnement de départ ;
déterminer la probabilité d'occupation respective sur la base de la probabilité d'occupation allouée à la cellule correspondante de la carte d'environnement de départ ;
fournir la carte d'environnement d'obstacles.

2. Procédé selon la revendication 1, dans lequel une valeur représentant le sol est déterminée pour la hauteur d'obstacle corrigée si la hauteur d'obstacle allouée à la cellule correspondante de la carte d'environnement de départ ne diffère pas du niveau du sol alloué à la cellule correspondante de la carte d'environnement de départ selon un critère prédéfini ; le critère définissant en particulier une différence de hauteur entre la hauteur d'obstacle et le niveau du sol selon la carte d'environnement de départ.

3. Procédé selon l'une quelconque des revendications précédentes, le procédé comprenant en outre l'étape consistant à :
déterminer une surface du sol sur la base d'un lissage de toutes ou du moins de plusieurs hauteurs d'obstacles de la carte d'environnement de départ ;
la détermination du niveau du sol étant effectuée sur la base de la surface de sol déterminée.

4. Procédé selon la revendication 3, dans lequel la surface du sol représente au moins en partie une surface plane inclinée et/ou une transition entre différentes surfaces planes.

5. Procédé selon l'une quelconque des revendications précédentes,
dans lequel les hauteurs d'obstacles de la carte d'environnement de départ et les hauteurs d'obstacles corrigées peuvent respectivement aussi adopter une valeur d'erreur qui représente le fait qu'il n'existe aucune mesure significative pour la cellule respective pour la hauteur d'obstacle ;
dans lequel la hauteur d'obstacle corrigée adopte la valeur d'erreur si la hauteur d'obstacle de la cellule correspondante de la carte d'environnement de départ présente la valeur d'erreur.

6. Procédé selon l'une quelconque des revendications précédentes, dans lequel chacune des cellules de la carte d'environnement d'obstacle représente respectivement la même zone de l'environnement que la cellule correspondante de la carte d'environnement de départ.

7. Procédé selon l'une quelconque des revendications précédentes, comprenant en outre les étapes consistant à :
fournir des mesures de point d'obstacle qui décrivent respectivement la position spatiale tridimensionnelle d'un point dans l'environnement du véhicule qui a été reconnu comme un obstacle ;
déterminer la carte d'environnement de départ sur la base des mesures de point d'obstacle.

8. Procédé selon la revendication 7, dans lequel les mesures de point d'obstacle sont obtenues à l'aide de capteurs de caméra, de capteurs radar, de capteurs lidar ou de capteurs à ultrasons du véhicule.

9. Unité de commande destinée à un véhicule, comprenant des mémoires, des moyens de calcul électroniques et des interfaces électroniques, l'unité de commande étant conçue pour exécuter un procédé selon l'une quelconque des revendications précédentes.
